# EUROPEAN PATENT APPLICATION

(11) **EP 4 576 286 A1**
(43) Date of publication of application: **25.06.2025**
(21) Application number: 23383322.7
(22) Date of filing: 19.12.2023
(51) Int. Cl.: H01M 8/1016, H01M 8/1226, H01M 8/124, H01M 8/1253, H01M 8/1286

(54) **A PROCESS FOR MANUFACTURING A FUNCTIONAL ELECTROCHEMICAL DEVICE BASED ON A FREESTANDING MEMBRANE**

(71) Applicant: Fundació Institut de Recerca en Energia de Catalunya (IREC), 08930 Sant Adrià de Besòs (ES); Institució Catalana De Recerca I Estudis Avançats (ICREA), 08010 Barcelona (ES)
(72) Inventor: KREKA, Kosova, Barcelona (AL); TARANCÓN RUBIO, Albert, Barcelona (ES); ALAYO BUENO, Nerea, Bilbao (ES); MORATA GARCÍA, Alex, Sant Adrià de Besòs (ES); BAIUTTI, Federico, Tiana (IT)
(74) Representative: Ponti & Partners, S.L.P

(57) **Abstract**

The present invention relates to a process for manufacturing a functional electrochemical device based on a freestanding membrane. The present invention also relates to the use of the potassium hydroxide stopper layer of a material selected from ZrO₂, HfOz and CeOz as ultrathin electrolyte or intermediate layer positioned within the electrolyte in thin-film solid oxide cells or oxygen ion batteries.

## Description

### Field of the invention

The present invention relates to electrochemical devices, in particular to a process for manufacturing a functional electrochemical device based on a thin film freestanding membrane.

### Background

In the last decades, advanced thin film technology has enabled a wide range of technological breakthroughs that have transformed entire sectors, such as the electronics, lighting, optics or energy sector. The advantage of nanoscale thin films is the raise of outstanding phenomena, which are present only in nanoscale materials and could potentially enhance the performance of the device. Additionally, the use of thin films allows the production of ultra-compact devices and the use of considerably low contents of critical raw materials. When considering the advantages of using thin films, scalable fabrication techniques are crucial.

The present invention is focused on the fabrication of functional thin film electrochemical devices, such as thin film solid oxide cells, batteries, pO2 sensors, transistors, etc... In this sense the present invention intends to manufacture thin film electrochemical devices by the use of micro-fabrication techniques in the silicon technology. In order to create compact devices, obtaining free-standing membranes of the functional films will reduce the size of device considerably. Typically the membranes are fabricated either using reactive ion etching or using only materials that are stable in KOH. Nevertheless, this process may lead to underetching between the silicon and the functional layer, potentially compromising the functionality of the membrane and the proper contact of the backside current collectors. Additionally, unintended etching of the functional layers may occur.

In order to overcome the above-mentioned drawbacks, the present inventors have developed a new and advantageous manufacturing process. In this case, an electrochemically active KOH resistive layer is deposited between the silicon substrate and the functional layers, henceforth referred to as the KOH stopper layer. Since this KOH stopper layer is electrochemically functional, it does not need to be removed at the end of the process, thus eliminating the need for reactive ion etching in membrane release. This process enables the creation of membranes using any potential material, regardless of their stability in KOH,

The KOH stopper layer is deposited using conformal deposition techniques, such as atomic layer deposition. Subsequently all the components (layers) of a cell (for example, SOC-Solid Oxide Cell) are deposited before releasing the membranes. This approach prevents contamination in the interfaces, while ensuring the functionality of the electrodes and avoiding the formation of pinholes. Therefore, the advantages of such invention can be summarized as:
i. Membrane devices with electrochemical properties are obtained
ii. It can be used with a wide variety of materials
iii. Avoids the formation of pin holes
iv. Improves stability of the electrodes
v. Avoids underetching between the substrate and the membranes.

### Summary of the invention

Accordingly, in a first aspect, the present invention relates to a process for manufacturing a functional electrochemical device based on a freestanding membrane comprising the step of depositing a KOH stopper layer made of a material selected from ZrO₂, HfO₂ and CeO₂ and with a thickness between 2 and 50 nm over a single crystal silicon (100) substrate, as defined in the claims.

In a second aspect, the present invention relates to the use of said KOH stopper layer made of a material selected from ZrO₂, HfO₂ and CeO₂ as ultrathin electrolyte or intermediate layer positioned within the electrolyte as defined in the claims.

### Brief description of the drawings

Figure 1 represents the diagram of the fabrication flow according to the present invention.
Figure 2 shows the profile of the whole silicon wafer (black), only Si(100) wafer, (blue) the silicon wafer with all the layers, (red) profile of the film obtained from subtracting the substrate Si(100) from the Si(100) with the ALD-Atomic Layer Deposition (barrier layer) and PLD-Pulse Laser Deposition (/electrode/electrolyte) films. The insert shows a photo of a wafer after the PLD deposition.
Figure 3a shows Optical image of the standing membrane and Fig. 3b shows SEM cross-section (ALD HfO₂/LSC/YSZ/LSC). HfO₂ represents Hafnium(IV) oxide, LSC represents Lanthanum strontium cobaltite and YSZ represents Yttria-stabilized zirconia.
Figure 4a) shows a SEM (Scanning Electron Microscopy) image of a released membrane, inset optical image of a membrane. Figure 4b) shows the cross-section of the film. Figure 4c) shows the surface of the deposited films (HfO₂/CGO/YSZ)
Figure 5 shows the Arrhenius plot of LSC82 electrodes coated with different thicknesses of ZrO₂.
Figure 6 shows Arrhenius plot of CGO (gadolinium doped ceria) electrodes coated with different thicknesses of ZrO₂.
Figure 7 shows Arrhenius plot of CGO-Ni electrodes coated with different thicknesses of ZrO₂.
Figure 8 shows the schematic of a device with a KOH stopper layer such as ZrO₂ as an electrolyte interlayer.
Figure 9 shows the area specific resistance of the Gd₂O₃ doped CeO₂ (CGO). See example 2.

### Detailed description

The present invention relates to a process for manufacturing a functional electrochemical device based on a freestanding membrane,
which freestanding membrane comprises a conformal layer of a potassium hydroxide (KOH) stopper layer of a material selected from ZrO₂, HfO₂ and CeO₂, preferably ZrO₂, and electrodes, electrolytes and current collectors,
comprising the process the steps of:
   a) preparing a substrate which comprises:
      i) depositing a KOH stopper layer made of a material selected from ZrO₂, HfO₂ and CeO₂, preferably ZrO₂, and with a thickness between 2 and 50 nm over a single crystal silicon (100) substrate;
      ii) depositing the layers of the electrodes, electrolytes and current collectors;
   b) dipping the substrate of step a) into a silicon etchant which is KOH(aq) while optionally protecting the top side of the substrate during the etching.

In a further preferred embodiment, the conditions of silicon etchant in step b) which is KOH (aq) are:
- Concentration range for KOH etching silicon between 5 % and 60 % by weight
- Temperature: 30-150 °C
- Optional with stirring (stirring helps maintaining a uniform etching rate)

In a preferred embodiment, the process according to the present invention further comprises the following steps for preparing the substrate in step a) which takes place before step i) or after step ii):
iii) depositing a KOH resistant layer on the back side of the single crystal silicon (100) substrate of step i); and
iv) patterning the KOH resistant layer on the back side of the single crystalline silicon (100) substrate.

In another preferred embodiment, the process according to the present invention further comprises a final step c) of rinsing the substrate in hydrochloric acid (HCl) and water.

In another preferred embodiment, the KOH resistant layer in step iii) is made of SiO₂ and/or Si₃N₄.

In a further preferred embodiment, the KOH resistant layer made of SiO₂ has a thickness of 20 nm to 100 µm, preferably 100 nm.

In a further preferred embodiment, the KOH resistant layer made of Si₃N₄ has a thickness of 20 nm to 100 µm, preferably 300 nm.

In another preferred embodiment, the steps a-i) and a-ii) are performed by pulse laser deposition (PLD), atomic layer deposition (ALD), chemical vapor deposition (CVD) or sputtering, preferably ALD.

In another preferred embodiment, said functional electrochemical device is selected from a fuel cell, sensor, electrolyser and battery.

In the context of the present invention, the term "conformal layer" is understood to mean a thin coating or film that uniformly covers irregular surfaces, maintaining a consistent thickness regardless of the underlying topography.

In the context of the present invention, the term "silicon (100) substrate" is understood to mean a silicon single crystal where the 100 direction is pointing perpendicular to the surface of the substrate. It is noted that the thinner the Si substrate the faster the etching process.

In the context of the present invention, the term "KOH stopper layer" is understood to mean a thin oxide layer that is used to stop the etching of the KOH and it exhibits some ionic conductivity.

In the context of the present invention, the term "KOH resistant layer" is understood to mean any material that is used to mask the silicon from etching during the time that the silicon substrate is in the KOH.

The present invention develops an interesting approach for manufacturing membranes integrated in silicon technology. This entails employing a silicon substrate (either sacrificial or final) along with standard microelectronics manufacturing methods. This approach utilizes well-established techniques, enabling efficient large-scale production. In this process, the membrane is created by selectively etching the silicon substrate from the backside, while the functional thin films are previously deposited on the top surface of the silicon substrate. This results in a free standing membrane composed of the functional materials suspended on a silicon frame. The silicon is usually etched using potassium hydroxide (KOH). In order to selectively etch the silicon, a mask is first created on the backside of the substrate. This mask needs to be formed of a material with a low KOH etching rate, such as silicon oxide (SiO₂) or silicon nitride (Si₃N₄), hereafter referred to as KOH resistive layer. The selectivity of the KOH etching for Si₃N₄ and SiO₂ is higher when obtained through thermal process, such us thermal oxidation, and low pressure chemical vapor deposition (LPCVD), respectively. When the materials of the functional layer are sensitive to the KOH etching, it is usual to also deposit a KOH-resistive layer on the top surface of the substrate, between the silicon and the functional layers. This stops the etching reaction upon reaching this layer, protecting the functional layer. However, in that scenario, subsequent removal of the KOH-resistive layer is required to release the membrane. Traditionally, the removal of the KOH-resistive layer has been achieved through a reactive ion etching process. Nonetheless, this removal as mentioned above has many disadvantages.

In a second aspect, the present invention relates to the use of the KOH stopper layer made of a material selected from ZrO₂, HfO₂ and CeO₂ employed in the process according to the first aspect as ultrathin (between 1 and 50 nm) electrolyte or intermediate layer positioned within the electrolyte in thin-film (between 100 nm and 2 µm) solid oxide cells or oxygen ion batteries. In the case of the former, where the ultrathin layer functions as an electrolyte, this capability arises from the existence of ionic conduction within these layers. Furthermore, the exceptional low and high conformity of these layers ensure effective electrode separation, mitigating the risk of short-circuits. Likewise, when the ultrathin layer operates as an interlayer sandwiched within the electrolyte, the layer's conformal nature guarantees the absence of any pinholes within the electrolyte.

It is noted that any of the embodiments disclosed herein for the process can be taken alone or combined with any other embodiment disclosed herein unless the context specifies otherwise. In other words, for example, a preferred option of a defined feature can be combined with a more or less preferred option of another feature.

The invention will be now illustrated by way of examples, which do not intend to limit its scope.

### EXAMPLE

### Example (1) of manufacturing a functional electrochemical device based on a freestanding membrane according to the invention

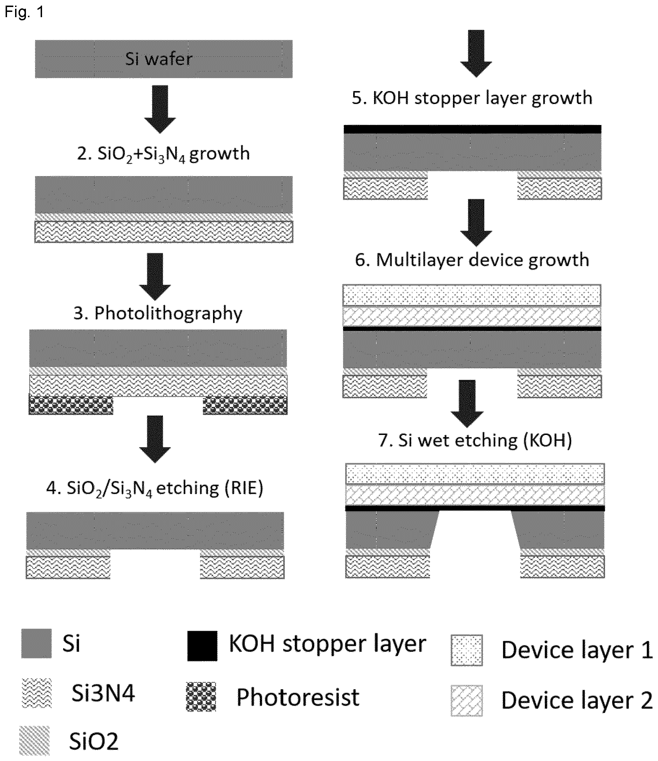

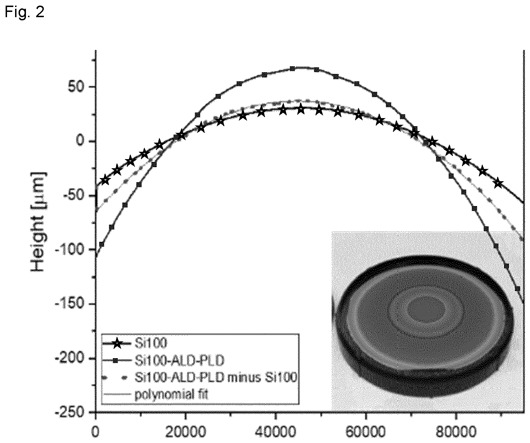

The following steps were carried out:
**Step 1. Preparation of the Si-substrate**: Si(100) single crystal wafers of 10 cm in diameter were used. The size of the silicon substrate is scalable. In the back side a 100 nm layer thermal SiOz and a 300 nm layer of Si₃N₄ were grown. The SiOz was grown in wet O₂ at 950°C. Using photolithography and Reactive ion etching (RIE), windows were created by removing the Si₃N₄ and SiOz layer, exposing the Si. The Si windows were opened in the desired sizes and geometries (in the sub mm range) using hard masks. See 1, 2, 3 in figure 1.
**Step 2. KOH Stopper deposition.** This stopper layer is deposited by atomic layer deposition (ALD) and it can be either ZrO₂, HfO₂ or CeO₂ which are deposited by ALD. See 4 in figure 1.
   **For HfO₂:**
      **Precursors:** Tetrakis(dimethylamido)hafnium(IV) (TDMAH), H₂O as oxidant reagent
      **Temperature:** 225°C
      **Precursor temperature:** 50°C
   **For ZrO₂**:
      **Precursor:** Tetrakis(ethylmethylamido)zirconium(IV), ≥99.9% (TEMAZ), H₂O as oxidant reagent.
      **Reactor Temperature:** 250°C
      **Precursor (TEMAZ) Temperature:** 132 °C
      **TEMAZ pulse time: 2s**
      **H2O pulse time: 0.1 s**
      **Carrier gas:** N₂
**Step 3. Device deposition:** Thin film deposition of the layered device. See 5 in figure 1. The deposition of the device can be done using PLD, ALD, CVD or any other thin film deposition technique. However, it is crucial that the multilayer film exhibits compressive stresses. See in figure 2 the confocal measurements on one of the multilayer thin films grown in Silicon. Note that we have compressive stresses.
**Step 4. Membrane release:** The membranes are fabricated by using KOH wet etching. See 6 in figure 1. The KOH bath information:
   **Concentration:** 40% KOH, **Temperature:** 80°C,
   **Cleaning:** HCl 0.1M and then 5 min in miliQ water

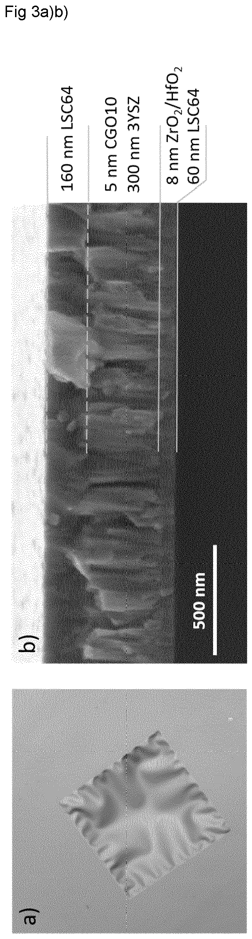

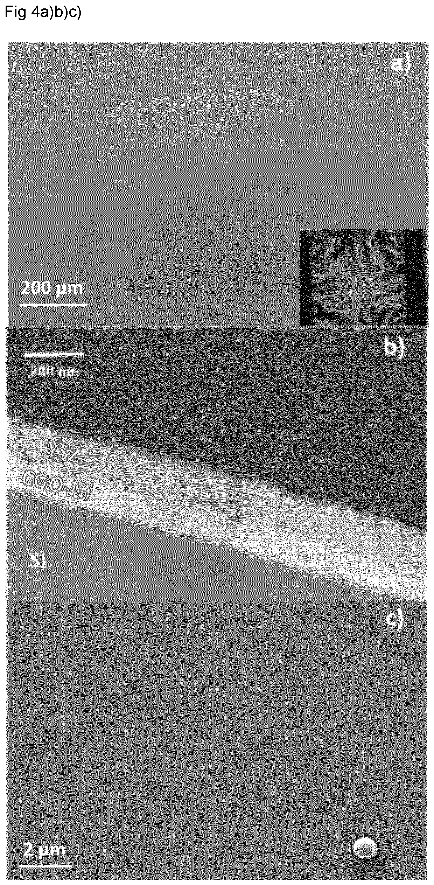

The images of the final devices are shown in Figure 3 and Figure 4.

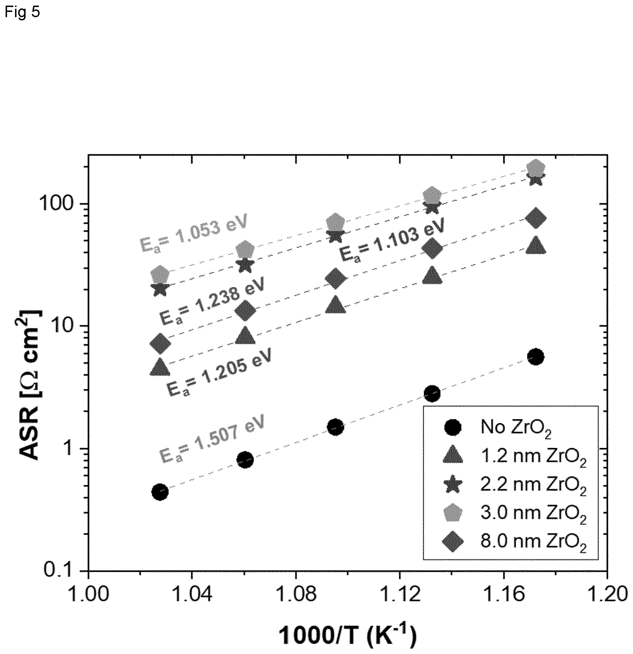

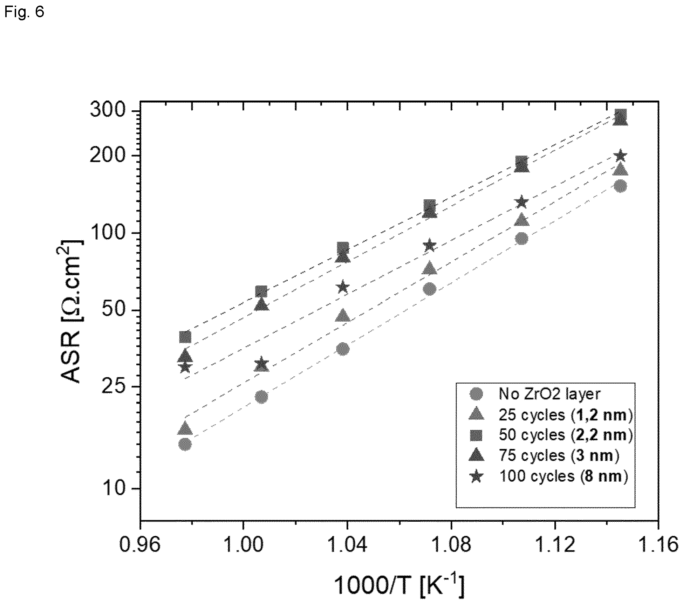

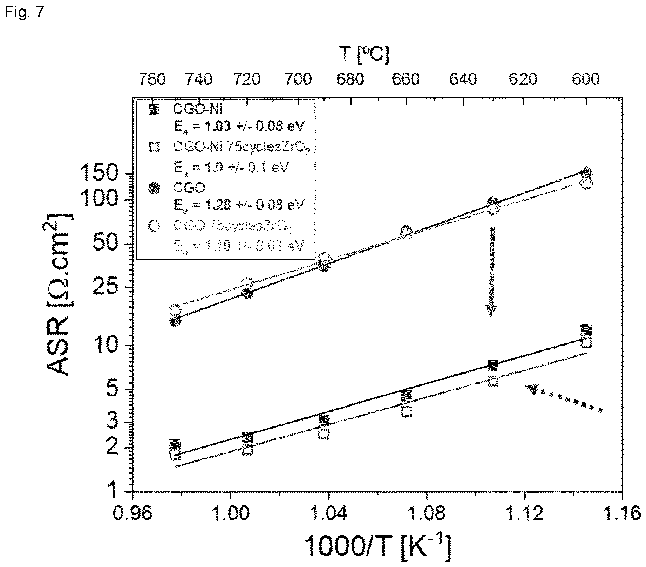

**The films remain functional:** one of the main advantages of employing this manufacturing process is the fact that we obtain functional devices. Figures 5, 6 and 7 show the electrochemical performances of different electrodes coated with the ALD ZrO₂, which acts as a KOH stopper layer.

### Example (2) of use of the of the KOH stopper layer made of a material selected from ZrO₂, HfO₂ and CeO₂ employed in the process according to the first example as ultrathin electrolyte or intermediate layer positioned within the electrolyte in thin-film solid oxide cells or oxygen ion batteries

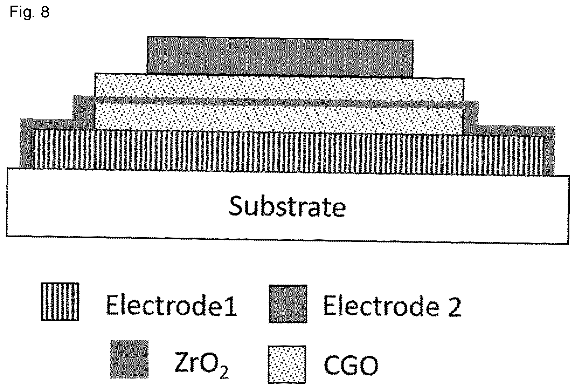

This is an example where an oxygen ion battery is deposited on top of a single crystal substrate, containing two electrodes and CGO as an electrolyte. In the middle of the electrolyte we have employed an ultrathin layer of ZrO₂ which was deposited by ALD. The schematic of this device is shown in Figure 8. The introduction of the ALD layer ensures the complete electronic isolation of both electrodes, by avoiding the formation of pinholes, while still upholding a notable level of ionic conduction.

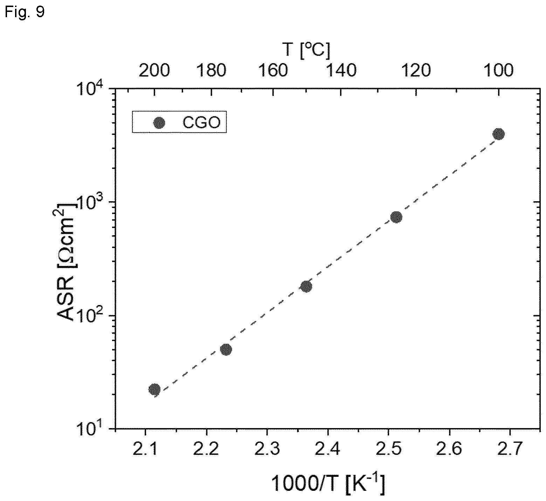

The results presented in Figure 9 demonstrate the attainment of minimal area-specific resistances at 200°C, thereby yielding exceptionally high-performance devices.

## Claims

1. A process for manufacturing a functional electrochemical device based on a freestanding membrane,
which freestanding membrane comprises a conformal layer of a potassium hydroxide (KOH) stopper layer of a material selected from ZrO₂, HfO₂ and CeO₂, and electrodes, electrolytes and current collectors,
comprising the process the steps of:
a) preparing a substrate which comprises:
i) depositing a KOH stopper layer made of a material selected from ZrO₂, HfO₂ and CeO₂ and with a thickness between 2 and 50 nm over a single crystal silicon (100) substrate;
ii) depositing the layers of the electrodes, electrolytes and current collectors;
b) dipping the substrate of step a) into a silicon etchant which is KOH(aq) while optionally protecting the top side of the substrate during the etching.

2. The process of claim 1, further comprising the following steps for preparing the substrate in step a) which takes place before step i) or after step ii):
iii) depositing a KOH resistant layer on the back side of the single crystal silicon (100) substrate of step i); and
iv) patterning the KOH resistant layer on the back side of the single crystalline silicon (100) substrate.

3. The process of claim 1 and 2, further comprising a final step c) of rinsing the substrate in hydrochloric acid (HCl) and water.

4. The process of any of the claims 2 or 3, wherein the KOH resistant layer in step iii) is made of SiO₂ and/or Si₃N₄.

5. Process according to claim 4, wherein the KOH resistant layer made of SiO₂ has a thickness of 20 nm to 100 µm, preferably 100 nm.

6. Process according to claim 4, wherein the KOH resistant layer made od Si₃N₄ has a thickness of 20 nm to 100 µm, preferably 300 nm.

7. Process according to any of the preceding claims wherein the steps a-i) and a-ii) are performed by pulse laser deposition (PLD), atomic layer deposition (ALD), chemical vapor deposition (CVD or sputtering).

8. The process according to any of the preceding claims, wherein said functional electrochemical device is selected from a fuel cell, sensor, electrolyser and battery.

9. Use of the potassium hydroxide stopper layer of a material selected from ZrO₂, HfO₂ and CeO₂ as ultrathin electrolyte or intermediate layer positioned within the electrolyte in thin-film solid oxide cells or oxygen ion batteries.
